# FASCICULE DE BREVET EUROPEEN

(11) **EP 1 020 212 B1**
(45) Date de publication et mention de la délivrance du brevet: **16.06.2004**
(21) Numéro de dépôt: 99811106.6
(22) Date de dépôt: 02.12.1999
(51) Int. Cl.: A63G 7/00

(54) **Dispositif de retenue d'un passager dans un siège d'installation pour parc d'attraction**
Insassen-Rückhalteelement in einer Anlage für Vergnügungspark
Passenger restraint member in an installation for amusement park

(30) Priorité: 11.01.1999 CH 4399
(43) Date de publication de la demande: 19.07.2000
(73) Titulaire: BOLLIGER & MABILLARD, INGENIEURS CONSEILS S.A., CH-1870 Monthey (CH)
(72) Inventeur: Bolliger, Walter, 1867 Antagnes (CH); Mabillard, Claude, 1871 Choex (CH)
(74) Mandataire: Ganguillet, Cyril

(56) Documents cités:
- US-A- 3 893 703
- US-A- 5 100 173

## Description

La présente invention concerne une installation pour parc d'attraction, notamment une installation du type roller coaster.

Les parcs d'attraction présentent en général diverses installations comportant des véhicules dans lesquels les passagers prennent place pour vivre une expérience originale et avoir des émotions et des sensations inhabituelles.

Les installations comportant des véhicules offrent un éventail de sensations très large allant de la simple balade, quelquefois surprenante dans les trains fantôme, aux figures d'acrobatie aérienne que permettent les roller coasters.

Aux vitesses et aux accélérations que chacune de ces installations propose aux visiteurs correspondent aussi des dispositifs de maintien plus ou moins sévères. Ainsi les roller coasters modernes, aux figures audacieuses, sont-ils en général pourvus de dispositifs de retenue très présents, de véritables carcans qui enserrent chaque passager. Ces dispositifs permettent d'éviter tout risque d'éjection du passager lors du parcours, mais nuisent à son confort.

Dans des installations moins audacieuses, mais néanmoins apparentées à la catégorie des roller coasters, des barres de maintien souvent en forme de "T" sont utilisées, la barre horizontale du "T", qui vient au contact du passager pour le maintenir dans son siège, étant entourée d'un boudin de mousse afin de rendre son contact plus confortable. Un tel dispasitif est par exemple décrit dans le document d'art antérieur US-A-5100173.

Qu'il s'agisse de roller coasters d'acrobatie ou de versions plus tranquilles, certains passagers lèvent les bras pour accentuer les impressions qu'ils ressentent. Cependant, dans leur très grande majorité, les passagers apprécient d'avoir à leur disposition des poignées auxquelles ils peuvent se tenir et ils en font largement usage. En réalité, les dispositifs de maintien sont tout à fait capables de retenir le passager sans que celui-ci ait à se cramponner aux poignées. Les poignées sont ainsi davantage destinées au confort mental des passagers qu'à leur sécurité, mais cela ne réduit pas pour autant leur utilité.

Même si, pour la plupart d'entre eux, les visiteurs se rendent dans les parcs en famille ou en groupe d'amis, lorsqu'il s'agit d'expérimenter une installation de ce genre, ce sont finalement des sentiments et des impressions individuelles que chacun ressent. Le caractère individuel des sensations ne résulte pas jusqu'ici de l'installation elle-même car les passagers sont placés côte à côte en rangées de deux ou quatre personnes en général et les trains sont formés de wagons de plusieurs rangées. Il y a donc un inévitable aspect collectif au parcours, même si comme on vient de le dire, les sensations sont essentiellement de nature individuelle.

Dans la recherche de nouvelles impressions ou d'impressions plus fortes que celles déjà connues, les constructeurs recourent à des tracés plus osés, à des dénivellations plus grandes, cependant, le caractère collectif mentionné plus haut demeure.

Idéalement, chaque passager devrait pouvoir disposer d'un véhicule individuel pour goûter pleinement aux plaisirs du tracé et éprouver des sensations plus fortes parce que rehaussées par le sentiment de liberté. Pour donner une image, un peu réductrice, on se sent nettement plus libre sur une bicyclette que dans un autobus. Malheureusement, lorsqu'on considère le nombre des visiteurs et le débit que doit avoir l'installation pour être rentable, les véhicules individuels sont immédiatement disqualifiés.

Le but de la présente invention est de proposer une installation qui, par la conception de ses véhicules et de la combinaison entre le siège et le moyen de retenue, permet en premier lieu de respecter un débit comparable aux installations connues, mais permet aussi en second lieu de placer les passagers dans un environnement qui intensifie les sentiments d'individualité et de liberté, donnant à chaque passager l'impression, bien sûr artificielle, qu'il est assis sur un tapis volant ou qu'il se trouve aux commandes d'une sorte de scooter volant, tout en garantissant une sécurité optimale de retenue du passager dans le siège.

A cet effet, l'invention concerne une installation pour parc d'attraction comportant au moins un véhicule aménagé de manière à pouvoir accueillir au moins un passager dans au moins un siège associé à au moins un dispositif de retenue comportant une barre basculante surmontée d'un élément de retenue destiné à maintenir le passager dans le siège, l'installation étant caractérisé en ce que l'élément de retenue présente une forme spatiale complexe dont la partie inférieure, destinée à venir au contact des cuisses du passager, comporte à cet effet deux évidements formant en creux l'empreinte grossière des cuisses du passager.

L'élément de retenue peut présenter une forme extérieure à bombage multiple et comporter des poignées, qui peuvent être situées à la partie avant de l'élément de retenue et en constituer des parties intégrantes.

L'élément de retenue peut comporter un bord de forme arrondie, de façon à épouser au moins partiellement le ventre du passager contre lequel il vient s'appuyer en position de blocage du dispositif de retenue.

Selon un mode d'exécution, la surface supérieure de l'élément de retenue est de forme générale bombée et comprend une première face arrière de forme sensiblement trapézoïdale, inclinée vers le haut, dont la grande base est constituée par ledit bord de forme arrondie, et dont la petite base constitue le côté d'une seconde face supérieure plongeant vers l'avant, ledit élément de retenue comportant des parties de formes concaves, constituant deux replats à ses deux coins avant, chacun desdits replats comportant une perforation à proximité de l'extrémité avant de l'élément de retenue, de façon à constituer des poignées.

La présente invention concerne également un élément pour la retenue d'un passager dans un siège d'installation pour parc d'attraction, ledit élément présentant une forme spatiale complexe dont la partie inférieure, destinée à venir au contact des cuisses du passager, comporte à cet effet deux évidements formant en creux l'empreinte grossière des cuisses du passager.

La description qui suit, donnée à titre d'exemple, se réfère au dessin sur lequel:
- la figure 1 est une vue partielle en perspective de trois quarts avant d'un exemple d'installation selon l'invention, le dispositif de retenue étant représenté en position ouverte,
- la figure 2 est une vue partielle en perspective de trois quarts avant de l'installation de la figure 1, le dispositif de retenue étant représenté en position fermée sans passager dans le siège,
- la figure 3 est une vue partielle en perspective trois quarts avant de l'installation de la figure 1, le dispositif de retenue étant représenté en position fermée avec un passager dans le siège,
- la figure 4 est une vue partielle en perspective avant depuis dessous de l'installation de la figure 1, le dispositif de retenue étant représenté en position fermée sans passager dans le siège,
- la figure 5 est une vue partielle en perspective trois quarts avant de l'élément de retenue du dispositif de retenue représenté à la figure 1,
- la figure 6 est une vue depuis dessus de l'élément de retenue de la figure 5,
- la figure 7 est une coupe selon la ligne A-A de l'élément de retenue de la figure 6, et
- la figure 8 est une vue plus générale illustrant le fait que les sièges et le dispositif de retenue sont disposés sur un simple plancher.

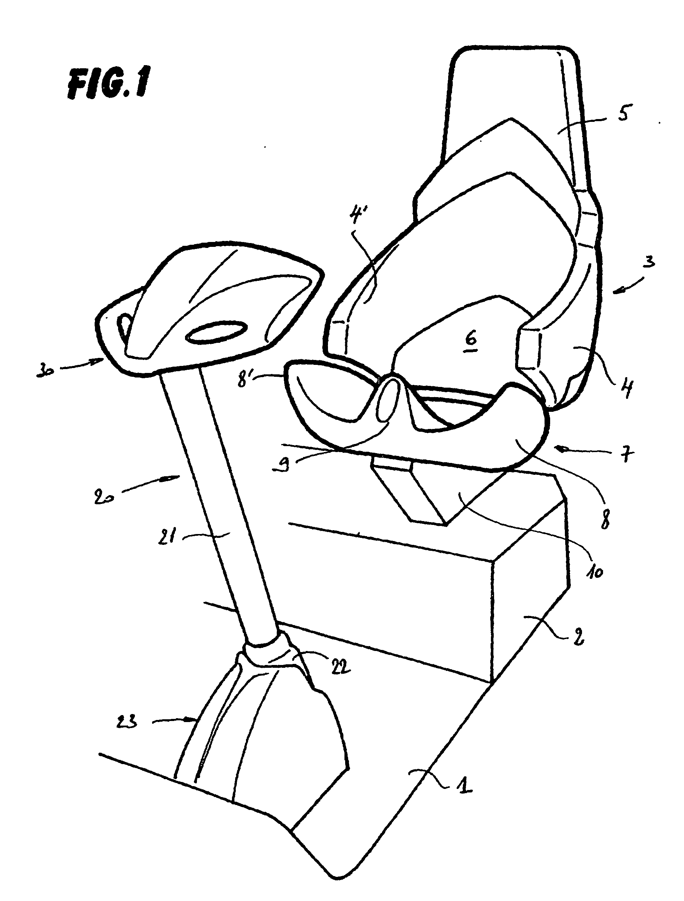

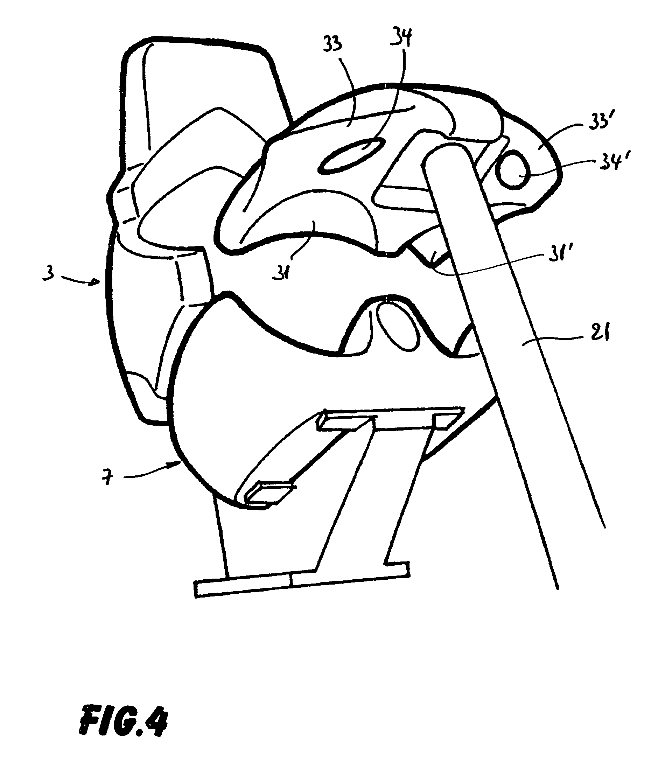

On a représenté sur les figures 1, 2 et 4 une partie d'un véhicule destiné à un circuit d'attraction du type roller coaster selon l'invention. Seule une partie du plancher 1, 2 du véhicule sur lequel sont montés d'une part un siège 3, 7 et d'autre part le dispositif de retenue 20 est représentée.

Le siège comporte une partie supérieure 3 en forme de coque, constituant la partie dorsale 5, 6 et les parties latérales 4, 4' du siège, servant également d'accoudoirs, et une partie inférieure de base 7, constituant le placet du siège, moulé au formes des fesses et des cuisses d'un passager. Les deux parties constituant le siège sont fixées sur un élément de support 10 lui-même fixé sur une partie 2 surélevée du plancher du véhicule.

Bien entendu, le siège peut également être réalisé d'une seule pièce ou de tout autre manière.

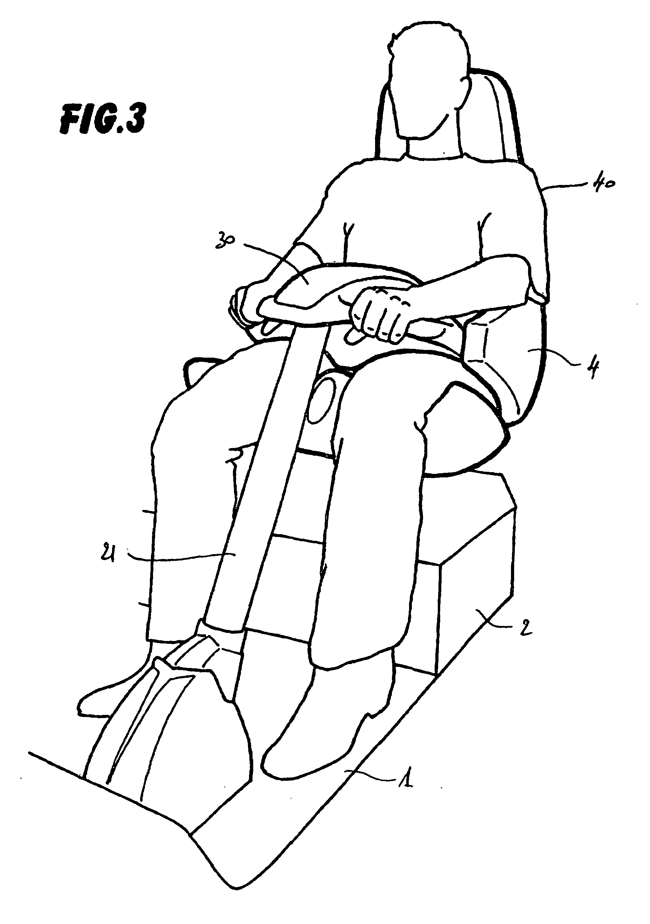

Le dispositif de retenue 20 comporte une barre de basculement 21 montée à son extrémité inférieure sur un élément basculant 22 solidaire d'un dispositif de basculement 23 monté sur le plancher 1 du véhicule. Un élément ventral de retenue 30 de forme spatiale complexe est monté à l'extrémité supérieure de la barre 21. Cet élément 30 est destiné à venir coopérer avec le siège 3, 7 après basculement de la barre 21 en direction du siège pour la retenue du passager dans le siège. L'ensemble est agencé de façon qu'en position de blocage l'élément de retenue 30 soit positionné sur les cuisses et contre le ventre du passager, comme le montre la figure 3.

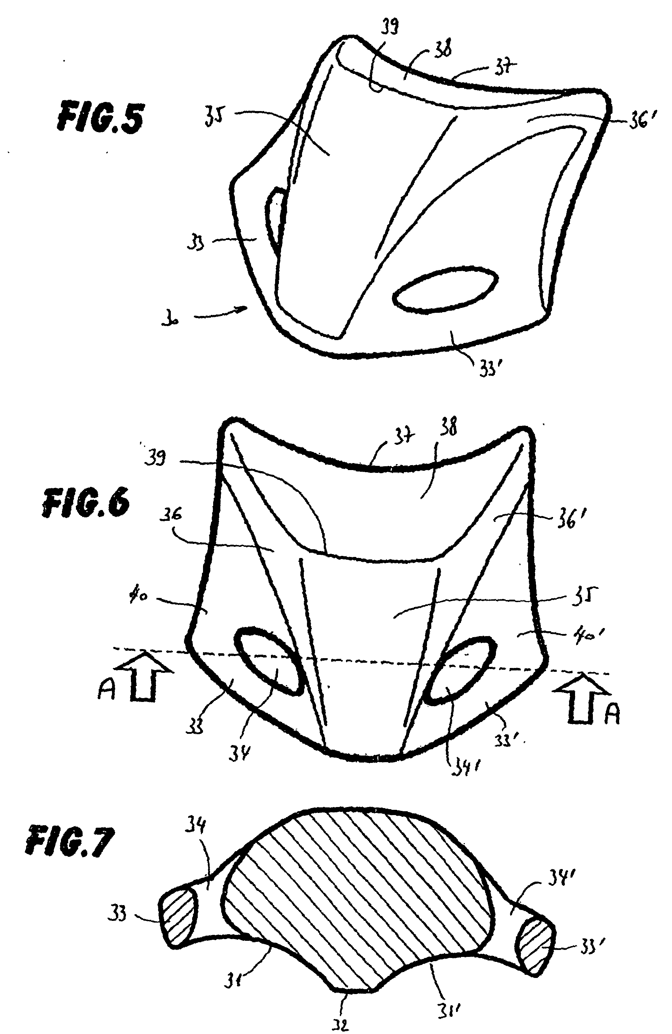

A cet effet, comme représenté aux figures 5 à 7, la surface inférieure de l'élément de retenue 30 comporte deux parties de formes convexes 31, 31' adaptées à la forme des parties supérieures des cuisses d'un passager lorsqu'il est assis dans le siège 3, 7. Le bord arrière 37 de l'élément de retenue 30 est de forme arrondie, de façon à épouser le ventre du passager contre lequel il vient s'appuyer en position de blocage. La surface supérieure de l'élément de retenue 30 est de forme générale bombée et comprend une première face arrière 38 de forme sensiblement trapézoïdale, inclinée vers le haut, dont la grande base est constituée par le bord 37, et dont la petite base 39 constitue le côté d'une seconde face supérieure 35 du coussin plongeant vers l'avant. De part et d'autre de la face 38, la surface supérieure de l'élément de retenue 30 comprend des parties de formes concaves 36, 36', constituant deux replats 40, 40' aux deux coins avant gauche et droit de l'élément de retenue. Chacun des replats 40, 40' comporte une perforation 34, 34' à proximite de l'extrémité avant de l'élément, de façon à constituer des poignées 33, 33' agencées pour être saisies par le passager qui peut s'y agripper tout au long du parcours s'il le souhaite.

Cet agencement permet en outre de supprimer les barres d'appui traditionnelles munies de poignées et disposées généralement devant chaque rangée de passagers. Il est de plus mieux adapté au confort du passager que le traditionnel harnais qui l'emprisonne totalement, tout en procurant au passager, comme on l'a mentionné plus haut, un sentiment d'individualité et de liberté beaucoup plus prononcé.

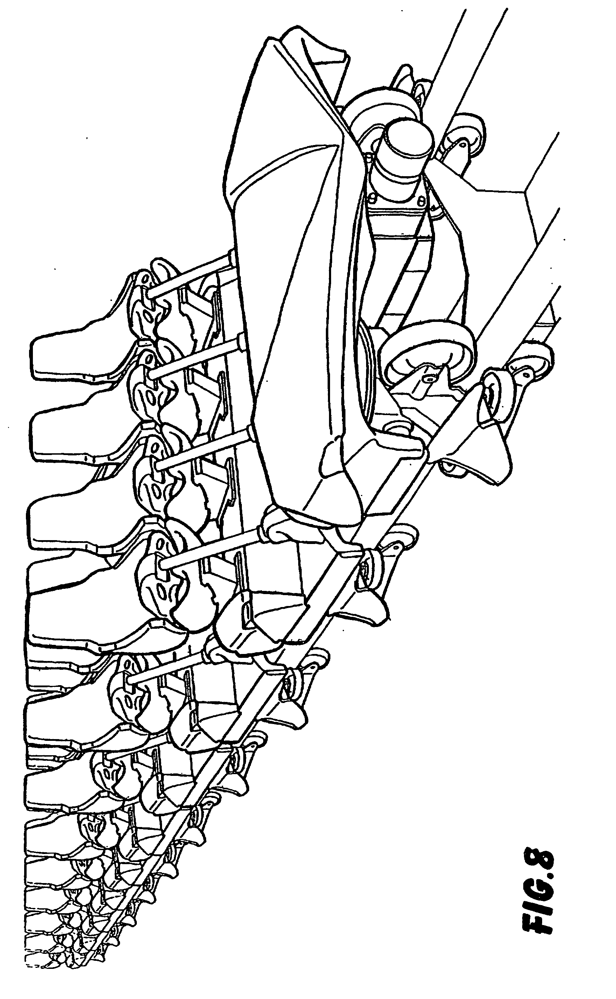

Ce sentiment d'individualite et de liberté est d'autant plus prononcé que, compte tenu de l'agencement siège/dispositif de retenue selon l'invention, le véhicule peut être réalisé selon une conception très dépouillée, comme représenté à la figure 8, les sièges et les dispositifs de retenue étant fixés sur de simples planchers sans élément ou paroi latérale ou frontale, de façon à donner au passager l'impression d'être assis sur un tapis volant.

Le verrouillage du dispositif de basculement 23 du dispositif de retenue s'effectue au moyen d'une boîte à cliquets agissant sur une roue dentée, le mécanisme permettant d'ajuster la position de l'élément de retenue en forme de coussin en fonction des mensurations, notamment de l'embonpoint du passager. Un tel mécanisme est connu en soi et n'est donc pas décrit ici dans le détail.

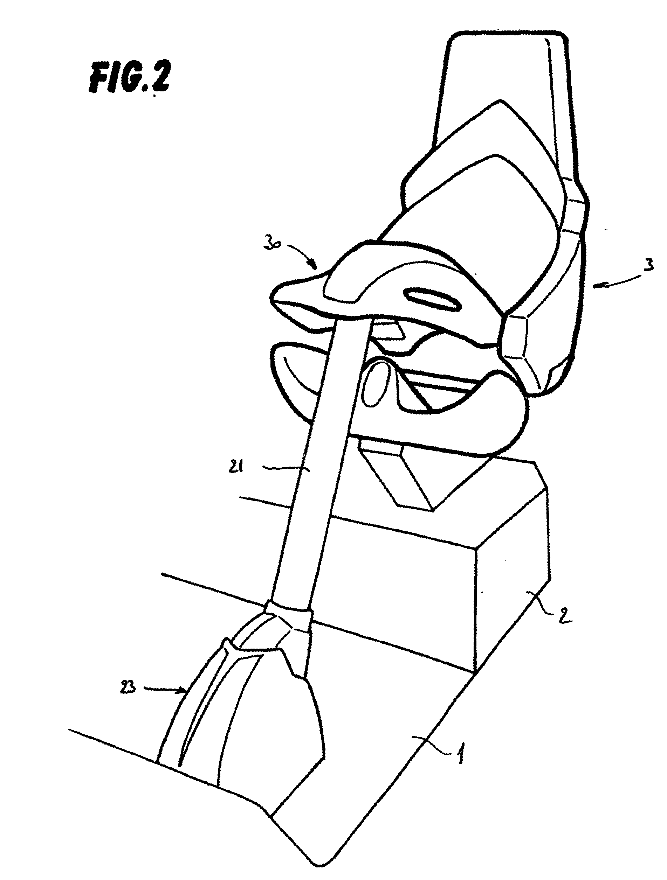

Comme on le voit bien sur les figures 2 à 4, lorsque le dispositif de retenue est en position fermée l'élément de retenue coopère d'une part avec la partie inférieure 7 du siège et d'autre part avec les parties 4, 4' en forme d'accoudoirs de la partie supérieure 3 du siège. Le passager qui est assis avec les cuisses en équerres par rapport à son tronc est, de par cette configuration, empêché de tout glissement, même volontaire, hors du siège, puisque d'une part ses cuisses sont emprisonnées entre l'élément de retenue 30 et le placet 7 du siège, et que d'autre part l'élément de retenue s'appuie contre son ventre. Toutefois, ce passager ne subit aucune entrave frontale au niveau des épaules, ce qui contribue à son confort.

Selon une autre forme d'exécution, non représentée sur le dessin, l'élément de retenue est dépourvu de poignées, des poignées étant, par exemple, intégrées et/ou rendues solidaires des extrémités avant des accoudoirs 4, 4' du siège.

## Revendications

1. Installation pour parc d'attraction comportant au moins un véhicule aménagé de manière à pouvoir accueillir au moins un passager dans au moins un siège (3,7) associé à au moins un dispositif de retenue (20) comportant une barre basculante (21) surmontée d'un élément de retenue (30) destiné à maintenir le passager dans le siège, **caractérisé en ce que** l'élément de retenue (30) présente une forme spatiale complexe dont la partie inférieure, destinée à venir au contact des cuisses du passager, comporte à cet effet deux évidements (31),(31') formant en creux l'empreinte grossière des cuisses du passager.

2. Installation selon la revendication 1, **caractérisée en ce que** l'élément de retenue présente une forme extérieure à bombage multiple.

3. Installation selon l'une des revendications précédentes, **caractérisé en ce que** l'élément de retenue comporte des poignées.

4. Installation selon la revendication précédente, **caractérisée en ce que** les poignées sont situées à la partie avant de l'élément de retenue et en constituent des parties intégrantes.

5. Installation selon l'une des revendications précédentes, **caractérisée en ce que** l'élément de retenue comporte un bord (37) de forme arrondie, de façon à épouser au moins partiellement le ventre du passager contre lequel il vient s'appuyer en position de blocage du dispositif de retenue.

6. Installation selon la revendication précédente, **caractérisée en ce que** la surface supérieure de l'élément de retenue est de forme générale bombée et comprend une première face arrière (38) de forme sensiblement trapézoïdale, inclinée vers le haut, dont la grande base est constituée par ledit bord (37) de forme arrondie, et dont la petite base (39) constitue le côté d'une seconde face supérieure (35) plongeant vers l'avant, et **en ce qu'**il comporte des parties de formes concaves (36, 36'), constituant deux replats (40, 40') aux deux coins avant de l'élément de retenue, chacun desdits replats comportant une perforation (34, 34') à proximité de l'extrémité avant de l'élément de retenue, de façon à constituer des poignées (33, 33').

7. Elément (30) pour la retenue d'un passager dans un siège d'installation pour parc d'attraction, **caractérisé en ce qu'**il présente une forme spatiale complexe dont la partie inférieure, destinée à venir au contact des cuisses du passager, comporte à cet effet deux évidements (31),(31') formant en creux l'empreinte grossière des cuisses du passager.

8. Elément selon la revendication 7, **caractérisé en ce qu'**il comporte des poignées.

9. Elément selon la revendication 8, **caractérisé en ce que** sa surface supérieure est de forme générale bombée et comprend une première face arrière (38) de forme sensiblement trapézoïdale, inclinée vers le haut, dont la grande base est constituée par ledit bord (37) de forme arrondie, et dont la petite base (39) constitue le côté d'une seconde face supérieure (35) plongeant vers l'avant, et **en ce qu'**il comporte des parties de formes concaves (36, 36'), constituant deux replats (40, 40') aux deux coins avant de l'élément, chacun desdits replats comportant une perforation (34, 34') à proximité de l'extrémité avant de l'élément, de façon à constituer des poignées (33, 33').

10. Elément selon l'une des revendications 7 à 9, **caractérisé en ce qu'**il comporte un bord (37) de forme arrondie, de façon à épouser au moins partiellement le ventre du passager contre lequel il est destiné à venir s'appuyer.

## Patentansprüche

1. Installation für einen Vergnügungspark mit zumindest einem Fahrzeug, das zur Aufnahme zumindest eines Passagieres in zumindest einem Sitz (3, 7) ausgerüstet ist, welcher mindestens einer Rückhalteeinrichtung (20) zugeordnet ist, die einen schwenkbaren Arm (21) aufweist, der von einem Rückhalteelement (30) wegragt, um einen Passagier in dem Sitz zu halten, **dadurch gekennzeichnet, dass** das Rückhalteelement (30) eine räumlich komplexe Form aufweist, dessen Unterseite, die in Kontakt mit den Schenkeln des Passagieres gebracht werden soll, zu diesem Zweck zwei Ausnehmungen (31, 31') aufweist, die als hohle Vertiefungen einen groben Abdruck der Schenkel des Passagieres bilden.

2. Installation nach Anspruch 1, **dadurch gekennzeichnet, dass** das Rückhalteelement eine äußere, mehrfach gewölbte Form aufweist.

3. Installation nach einem der vorhergehenden Ansprüche, **dadurch gekennzeichnet, dass** das Rückhalteelement Handgriffe aufweist.

4. Installation nach dem vorhergehenden Anspruch, **dadurch gekennzeichnet, dass** die Handgriffe an der Vorderseite des Rückhalteelementes gelegen sind und mit diesem integrierte Bereiche bilden.

5. Installation nach einem der vorhergehenden Ansprüche, **dadurch gekennzeichnet, dass** das Rückhalteelement einen Rand mit abgerundeter Form aufweist, der zumindest teilweise an den Unterleib des Passagieres angepasst ist und diesen in der Riegelposition der Rückhalteeinrichtung abstützt.

6. Installation nach dem vorhergehenden Anspruch, **dadurch gekennzeichnet, dass** die Oberseite des Rückhalteelementes eine generell gewölbte Form aufweist und eine erste rückwärtige Fläche (38) mit einer im Wesentlichen trapezförmigen Form aufweist, die nach oben geneigt ist, wobei deren große Basis durch den genannten Rand (37) mit abgerundeter Form gebildet ist und deren kleine Basis (33) den Rand einer zweiten oberen Fläche (35) bildet, die nach vorne abfällt, und dass Bereiche mit konkaven Formen (36, 36') vorgesehen sind, die zwei Terrassen (40, 40') an den beiden vorderen Ecken des Rückhalteelementes bilden, wobei jede dieser Terrassen eine Perforation (34, 34') in der Nähe des vorderen Endes des Rückhalteelementes aufweist, um dadurch Handgriffe (33, 33') zu bilden.

7. Element (30) zum Halten eines Passagieres in einem Sitz einer Installation für einen Vergnügungspark, **dadurch gekennzeichnet, dass** es eine komplexe räumliche Form aufweist, deren Unterseite, die in Kontakt mit den Schenkeln des Passagieres bringbar ist, zu diesem Zweck zwei Ausnehmungen (31, 31') aufweisen, die als Hohlkörper einen groben Abdruck der Schenkel des Passagieres bilden.

8. Element nach Anspruch 7, **dadurch gekennzeichnet, dass** es Handgriffe aufweist.

9. Element nach Anspruch 8, **dadurch gekennzeichnet, dass** dessen Oberseite generell gewölbt ausgebildet ist und eine erste rückwärtige Fläche (38) mit einer im Wesentlichen trapezförmigen Form aufweist, die nach oben geneigt ist und deren große Basis durch den Rand (37) mit abgerundeter Form gebildet ist und deren kleine Basis (39) den Rand einer zweiten oberen Fläche (35) bildet, die nach vorne abfällt, und dass Bereiche mit konkaven Formen (36, 36') vorgesehen sind, die zwei Terrassenflächen (40, 40') an beiden vorderen Ecken des Elementes bilden, wobei jede dieser Flächen eine Perforation (34, 34') in der Nähe des vorderen Endes des Elementes aufweist, die jeweils einen Handgriff (33, 33') bildet.

10. Element nach einem der Ansprüche 7 bis 9, **dadurch gekennzeichnet, dass** es einen Rand (37) mit abgerundeter Form aufweist, der zumindest teilweise an den Unterleib des Passagieres angepasst ist und ausgelegt ist, diesen abzustützen.

## Claims

1. Installation for amusement park, comprising at least one vehicle designed in such a way as to be able of accommodating at least one passenger in at least one seat(3, 7), associated with at least one retention device (20) comprising a pivoting bar (21) topped by a retention element (30) intended to maintain the passenger in the seat, **characterized in that** the retention element (30) features a complex spatial form, of which the lower part, intended to come in contact with the passenger's thighs, comprises for this purpose two recesses (31, 31') forming a hollow corresponding approximately to the passenger's thighs.

2. Installation according to claim 1, **characterized in that** the retention element features an external shape of multiple dishings and roundings.

3. Installation according to one of the preceding claims, **characterized in that** the retention element comprises handles.

4. Installation according to the preceding claim, **characterized in that** the handles are located in the front part of the retention element, and form integrated parts of the same.

5. Installation according to one of the preceding claims, **characterized in that** the retention element comprises an edge (37) of rounded form, in such a way as to match at least partially with the stomach of the passenger against whom it comes to rest when the retention device is in the blocking position.

6. Installation according to the preceding claim, **characterized in that** the upper surface of the retention element is of a generally dished and rounded appearance, and comprises a first rear face (38) essentially trapezoidal in shape, inclined upwards, of which the large base is formed by the said edge (37) of rounded shape, and of which the small base (39) constitutes the side of a second upper face (35), inclining forwards, and **in that** it comprises parts (36, 36') which are concave in shape, constituting two shoulder edges (40, 40') at the two front corners of the retention device, each of the said shoulder edges containing a perforation (34, 34') in the vicinity of the front end of the retention device, in such a way as to form handles (33, 33').

7. Element (30) for retaining a passenger in a seat of an installation for amusement park, **characterized in that** it features a complex spatial form of which the lower part, intended to come in contact with the passenger's thighs, comprises for this purpose two recesses (31, 31') forming a hollow corresponding approximately to the passenger's thighs.

8. Element according to claim 7, **characterized in that** it contains handles.

9. Element according to claim 8, **characterized in that** its upper surface is of a generally dished and rounded appearance, and comprises a first rear face (38) essentially trapezoidal in shape, inclined upwards, of which the large base is formed by the said edge (37) of rounded shape, and of which the small base (39) constitutes the edge of a second upper face (35) inclined forwards, said element further comprising parts (36, 36') concave in shape, consisting of two shoulder edges (40, 40') at the front two corners of the element, each of the said shoulder edges containing a perforation (34, 34') in the vicinity of the front end of the element, in such a way as to form handles (33, 33').

10. Element according to one of claims 7 to 9, **characterized in that** it comprises an edge (37) of rounded shape, in such a way as to match at least in part the stomach of the passenger against whom it is intended to come to rest.
